# EUROPEAN PATENT APPLICATION

(11) **EP 4 804 475 A1**
(43) Date of publication of application: **09.09.2026**
(21) Application number: 24896401.7
(22) Date of filing: 21.11.2024
(51) Int. Cl.: H04L 41/16

(54) **COMMUNICATION METHOD AND RELATED APPARATUS**

(30) Priority: 27.11.2023 CN 202311604208
(71) Applicant: Huawei Technologies Co., Ltd., Shenzhen, Guangdong 518129 (CN)
(72) Inventor: ZHU, Zheqi, Shenzhen, Guangdong 518129 (CN); ZENG, Yu, Shenzhen, Guangdong 518129 (CN); YE, Kuan, Shenzhen, Guangdong 518129 (CN)
(74) Representative: Pfenning, Meinig & Partner mbB
(86) International application number: PCT/CN2024/133532
(87) International publication number: WO 2025/113310

(57) **Abstract**

This application is applied to the field of communication technologies, and provides a communication method and a communication apparatus. In the technical solution provided in this application, a receiving node obtains an output result of a first artificial intelligence AI model, and adds explainability analysis to the output result; and the receiving node obtains an explainability result of the output result, and determines reasonableness of the output result of an inference model. Therefore, in this application, model explainability analysis and interaction are added to an AI application of a communication network, to improve reasonableness of an AI inference result, thereby ensuring reliability of applying an AI algorithm to the communication network.

## Description

This application claims priority to Chinese Patent Application No. 202311604208.X, filed with the China National Intellectual Property Administration on November 27, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

With development of artificial intelligence (artificial intelligence, AI) and continuous improvement of performance requirements of a communication system, AI technologies are applied to more scenarios in the communication system.

Currently, a technical solution of applying the AI technologies in the communication system is as follows: A receiving node initiates an AI task request to a model management node or provides data required for AI inference; the model management node completes AI inference locally or together with a compute network element; the model management node feeds back an inference result to the receiving node; and the receiving node returns an result acknowledgment or feedback information to the model management node. The first step and the fourth step may be optional steps. The receiving node is a requester of AI inference, for example, may be a terminal. The model management node is a node that provides and executes an AI service in a communication network.

However, in the foregoing technical solution of applying to the AI technologies in the communication system, the following problem exists: Reliability determining is not performed on the inference result that is of an AI model and that is fed back by the model management node to the receiving node. Consequently, reliability of communication performance of the communication system cannot be ensured.

### SUMMARY

This application provides a communication method and a related apparatus, to implement reliability feedback of an inference result of an AI model in a communication system, thereby improving communication performance.

According to a first aspect, this application provides a communication method. The method is applied to a communication node, or an apparatus, a module, a circuit, or a chip in the communication node, or an apparatus that can be used in a matching manner with the communication node. The method includes: obtaining an inference result of a first artificial intelligence AI model; and obtaining an explainability result of the inference result.

In the method, an explainability mechanism of an AI model is added to a communication node, to obtain an explainability result of an inference result of the AI model. Because the explainability result may be used to explain the AI model, the explainability result may be used to determine reasonableness of the inference result of the AI model, and therefore may be used to evaluate reliability of the inference result after use. It can be learned that, obtaining the explainability result may provide technical support for determining a confidence level and the reasonableness of the inference result of the AI model, thereby helping ensure reliability of an AI algorithm in a communication system, and further improving communication performance.

It may be understood that, the obtaining the explainability result in the method may include: receiving the explainability result, or determining, by the communication node, the explainability result.

In some possible implementations, the method may further include: sending first information, where the first information indicates first explainability related information, the first explainability related information is explainability related information of the AI model, and the explainability related information of the AI model includes at least one piece of the following information: an AI model explainability method, an output type, explanation content of the AI model explainability method, or explanation precision of the AI model explainability method, and the output type is a type of an output result of the AI model. The first information is used by a communication node that receives the first information to determine the explainability result of the inference result of the AI model.

In this implementation, optionally, the obtaining the inference result of the AI model may include: receiving the inference result of the AI model; and the obtaining the explainability result may include: receiving the explainability result. The sending the first information may be before the receiving the explainability result, and further, may be before the receiving the inference result.

In this implementation, a current communication node provides a model explainability indicator for the communication node that provides the inference result of the AI model, so that the communication node that receives the first information can obtain an explainability result that can better meet a requirement of the current communication node, thereby improving reasonableness of model explainability analysis.

In some possible implementations, the first information is one of a plurality of pieces of explainability related information, and the first information includes an index of the first explainability related information in the plurality of pieces of explainability related information.

In other words, the current communication node indicates, to the communication node that determines the explainability result by using an index, explainability related information required for determining the explainability result.

In some possible implementations, the method further includes: receiving second information, where the second information indicates explainability related information associated with each of at least one output type.

In other words, the current communication node learns of, by using the second information, the explainability related information supported by the communication node that determines the explainability result. In this case, when the current communication node sends the first information, the explainability related information indicated by the first information may be determined by using the second information. For example, the explainability related information indicated by the first information may be the explainability related information supported by the communication node that determines the explainability result.

In some possible implementations, the method further includes: receiving third information, where the third information indicates to obtain information required by the explainability result of the inference result of the first AI model; and the obtaining the explainability result of the inference result includes: determining the explainability result based on the third information.

In other words, input data required for performing explainability analysis is obtained by using the third information, and explainability analysis is performed by using the input data, to obtain the explainability result. For example, when determining the explainability result, the current communication node may receive the third information.

In some possible implementations, the method further includes: sending fourth information, where the fourth information is used to request to obtain the information required by the explainability result of the inference result of the first AI model.

In other words, the current communication node requests, by using the fourth information, the input data required for performing explainability analysis. For example, when determining the explainability result, the current communication node may send the fourth information.

In some possible implementations, the method further includes: sending the explainability result.

For example, when the explainability result is used by another communication node to analyze the reasonableness of the inference result, the current communication node may send the determined explainability result to the another communication node.

In some possible implementations, the obtaining the explainability result of the inference result includes: receiving the explainability result. For example, when the explainability result is obtained by another communication node through analysis, the current communication node may receive the explainability result from the another communication node.

In some possible implementations, the method further includes: sending fifth information, where the fifth information indicates reasonableness of the inference result of the first AI model.

For example, when the current communication node is a node that uses the explainability result, the current communication node may determine or judge, based on the explainability result, the reasonableness of the inference result, and feed back the reasonableness of the inference result to another communication node that determines the inference result, so that the another communication node may perform processing such as adjustment on the AI model, to improve reliability of the inference result, thereby improving communication reliability.

According to a second aspect, this application provides a communication apparatus, including a module or a unit configured to implement the method according to any one of the first aspect and the possible implementations of the first aspect. It should be understood that, each module or unit may implement a corresponding function by executing a computer program.

According to a third aspect, this application provides a communication apparatus, including a processor. The processor is configured to perform the communication method according to any one of the first aspect or the possible implementations of the first aspect. The communication apparatus may be a chip or a chip system used in a terminal device.

The apparatus may further include a memory configured to store instructions and data. The memory is coupled to the processor. When the processor executes the instructions stored in the memory, the method described according to any one of the first aspect or the possible implementations of the first aspect may be implemented. The apparatus may further include a communication interface. The communication interface is used by the apparatus to communicate with another device. For example, the communication interface may be a transceiver, a circuit, a bus, a module, or another type of communication interface.

According to a fourth aspect, this application provides a computer-readable storage medium. The computer-readable storage medium stores program code to be executed by a communication apparatus, and the program code includes instructions for implementing the method according to any one of the first aspect and the possible implementations of the first aspect.

According to a fifth aspect, this application provides a computer program product including instructions. When the computer program product runs on a communication apparatus, the communication apparatus is caused to implement the method according to any one of the first aspect and the possible implementations of the first aspect.

According to a sixth aspect, this application provides a communication system. The communication system includes a communication apparatus configured to implement the method in any one of the first aspect or the possible implementations of the first aspect.

### BRIEF DESCRIPTION OF DRAWINGS

FIG. 1 is a diagram of a communication system to which a method according to an embodiment of this application is applicable;
FIG. 2 is a diagram of another communication system to which a method according to an embodiment of this application is applicable;
FIG. 3 is a schematic flowchart of a communication method according to an embodiment of this application;
FIG. 4 is a schematic flowchart of a communication method according to an embodiment of this application;
FIG. 5 is a diagram of a structure of a communication apparatus according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a communication apparatus according to another embodiment of this application.

### DESCRIPTION OF EMBODIMENTS

The following describes technical solutions in embodiments of this application with reference to accompanying drawings in embodiments of this application.

To clearly describe the technical solutions in embodiments of this application, terms such as "first" and "second" are used in embodiments of this application to distinguish between same items or similar items having basically same functions and purposes. A person skilled in the art may understand that the terms such as "first" and "second" do not limit a quantity or an execution order, and the terms such as "first" and "second" do not indicate a definite difference.

It should be noted that in embodiments of this application, the term like "example" or "for example" is used to represent giving an example, an illustration, or descriptions. Any embodiment or design solution described as an "example" or "for example" in this application should not be explained as being more preferred or having more advantages than another embodiment or design solution. Exactly, use of the words such as "example" or "for example" is intended to present a relative concept in a specific manner.

In embodiments of this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, and (or) c may indicate a, b, c, a and b, a and c, b and c, or a, b, and c, where a, b, and c may be singular or plural.

For ease of understanding of a communication method provided in embodiments of this application, the following describes a system architecture and an application scenario of the communication method provided in embodiments of this application. It may be understood that, the system architecture and the application scenario described in embodiments of this application are intended to describe the technical solutions in embodiments of this application more clearly, and do not constitute a limitation on the technical solutions provided in embodiments of this application.

In recent years, because of rapid development of machine learning, especially deep learning technologies, AI capabilities in fields such as prediction, fitting, classification, and online autonomous decision-making are continuously improved. In addition to strengthening many conventional applications, AI brings more new scenarios. For a mobile system, machine learning technologies have been considered to be applied to a physical layer to replace a conventional module like a channel prediction module. In addition, in an application scenario involving interaction between nodes, AI also brings more methods for predicting a communication event or behavior, such as load balancing and mobility optimization. To address problems such as high power consumption that are introduced by 5G, a plurality of AI methods, such as deep learning (deep learning, DL) and reinforcement learning (reinforcement learning, RL), are introduced to formulate a reasonable energy saving policy.

It should be noted that, AI application interaction of a plurality of nodes in a communication system in this application includes but is not limited to channel prediction, mobility optimization, load balancing, AI prediction information exchange between base stations, and the like. An AI application scenario in the communication system is not described in detail in this application, and a communication system that can implement a function set of an AI application in the communication system should fall within the protection scope of this application.

For an application integrating AI technologies in the communication field, the technical solutions provided in this application may be applied to various communication systems, for example, a fifth generation (5th generation, 5G) or a new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a sixth generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system, for example, a sixth generation (6th generation, 6G) communication system.

A device in the communication system may send a signal to another device or receive a signal from another device. The signal may include information, signaling, data, or the like. The device may alternatively be replaced with an entity, a network entity, a communication device, a communication module, a node, a communication node, or the like. In this application, the communication node is used as an example for description. For example, the communication system may include a plurality of communication nodes, for example, at least one receiving node and one model management node. The model management node may send a signal to the receiving node, and/or the receiving node may send a signal to the model management node. The receiving node may be an AI inference requester, and is responsible for receiving, analyzing, and using an AI inference result. The model management node may be a node that provides and executes an AI service in a communication network, and is responsible for storing, training, and managing an AI model of a corresponding task, and responding to a request of the receiving node to perform inference of an AI task.

In embodiments of this application, the receiving node may be a terminal device, or may be a network device.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on the body or integrated into clothes or an accessory of a user. The wearable device is a hardware device, and also implements a powerful function through software support, data exchange, and cloud interaction. In a broad sense, the wearable intelligent device includes full-featured and large-sized devices that may implement complete or partial functions without depending on smartphones, such as smart watches or smart glasses, and devices that are dedicated to only one type of application function and need to work with other devices such as the smartphones, such as various smart bands or smart jewelry for monitoring physical signs.

In embodiments of this application, an apparatus configured to implement a function of the terminal device may be a terminal device, or may be an apparatus that can support a terminal device in implementing the function, for example, a chip system. The apparatus may be mounted in the terminal device or used in matching with the terminal device. In embodiments of this application, the chip system may include a chip, or may include a chip and another discrete device. In embodiments of this application, only an example in which the apparatus configured to implement the function of the terminal device is a terminal device is used for description, and constitutes no limitation on the solutions in embodiments of this application.

The model management node in embodiments of this application may be a network device. The network device is a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission and reception point, TRP), a transmission point (transmission point, TP), a master station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application. In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist a terminal in implementing radio access, and different RAN nodes separately implement a part of functions of a base station. For example, the RAN node may be a CU, a DU, a CU-CP, a CU-UP, or an RU. The CU and the DU may be separately disposed, or may be included in a same network element, for example, in a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, compared with the CPRI, the interface performs transfer of a part of downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, split manners between the DU and RU are different, which correspond to different categories (categories, Cats) of eCPRIs, such as eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions after the demapping (for example, one or more of digital BF or fast Fourier transform (fast Fourier transform, FFT)/CP removal) are moved to the RU for implementation. It may be understood that, for function descriptions of DUs and RUs corresponding to various categories of eCPRIs, refer to the eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a base band low (base band low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus, for example, a chip system, a hardware circuit, a software module, or a hardware module that can support the network device in implementing the function. The apparatus may be installed in the network device or used in cooperation with the network device. In embodiments of this application, only an example in which the apparatus configured to implement the function of the model management node is a network device is used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. Scenarios of the network device and the terminal device are not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

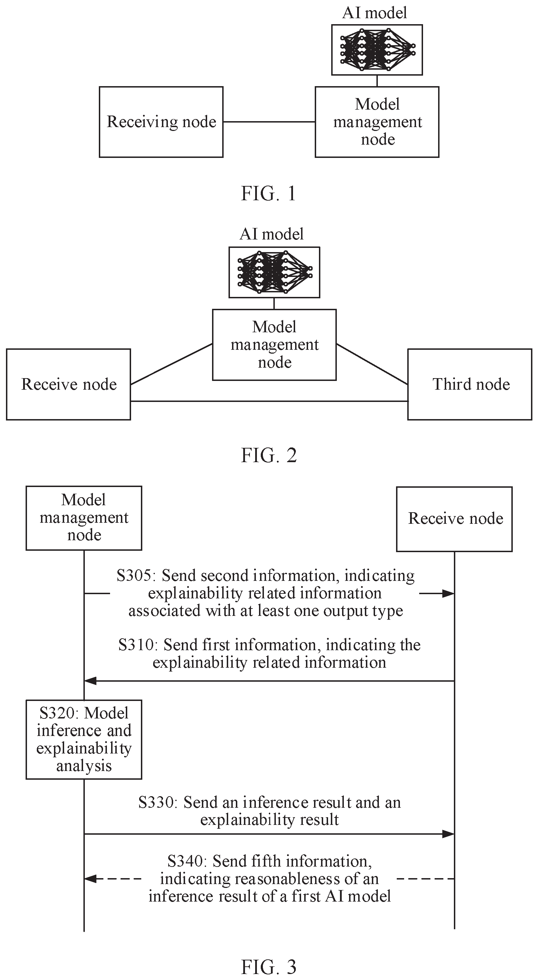

FIG. 1 is a diagram of a communication system to which a method according to an embodiment of this application is applicable. As shown in FIG. 1, the communication system may include a receiving node and a model management node.

The model management node may be referred to as a management node for short, and may be a base station having computational power or a compute network element in a network. The receiving node may be a terminal or a base station.

The management node is responsible for model training and inference of a requested task, and the receiving node initiates and receives an inference result of an AI task. When the management node completes inference of the AI task and feeds back the inference result to the receiving node, the management node may perform model explainability analysis and notify the receiving node of an explainability analysis result, or the receiving node may perform model explainability analysis to obtain the explainability analysis result, to assist the receiving node in determining the inference result and performing subsequent operations.

FIG. 2 is a diagram of another communication system to which a method according to an embodiment of this application is applicable. As shown in FIG. 2, compared with the communication system shown in FIG. 1, the communication system may further include a third node.

The third node may be a dedicated model management network element, and is used for AI model evaluation. For example, the third node may be a base station having computational power or a compute network element in a network. A difference between the third node and a management node is that the third node is not a node that performs AI inference of a task.

In the communication system shown in FIG. 2, a third-party node may perform model explainability analysis and notify a receiving node of an explainability analysis result, to assist the receiving node in determining an inference result and performing a subsequent operation.

In different scenarios in which the communication system shown in FIG. 1 or FIG. 2 is integrated with AI technologies, the AI model may complete different functional operations. For example, in a scenario in which a receiving node is UE and the model management node is a gNB, the corresponding UE requests AI tasks such as resource scheduling, prediction instructions, and perception from the gNB. In a cross-site scenario in which the receiving node is a gNB and the model management node is a gNB, the AI model may be applied to mobility enhancement, handover prediction, terminal behavior prediction, and the like. When the receiving node is a gNB and the model management node is a NodeC, the AI model is applicable to most RAN AI scenarios, and the base station requests an AI inference result from a compute network element.

It should be noted that, FIG. 1 and FIG. 2 are merely simplified diagrams of examples for ease of understanding. In an actual application, the communication system may include a plurality of receiving nodes, or may include a plurality of model management nodes. Quantities of receiving nodes and model management nodes included in the communication system are not limited in embodiments of this application.

Most of existing mainstream AI models use an end-to-end training and inference mode. AI models have a "black-box effect". There is no unified and general explanation about how to train data to guide update of the AI models and how the AI models understand and process input data and the like. In addition, complex models and large models having common capabilities are gradually becoming a mainstream, and complexity and explainability of models are negatively correlated. As a result, higher complexity of the models indicates higher difficulty in explainability of the models, leading to an increase in uncertainty of a confidence level of an output result.

Therefore, explainable AI (explainable AI, XAI) has become a hot topic of discussion in the academia and industry. An explainability method is a method for understanding and trusting an inference/training process and a result of a machine learning model, to help describe accuracy, fairness, transparency, reasonableness, and the like of the model.

Currently, many existing XAI methods provide a large quantity of options for explaining a model, for example, from dimensions such as a text, an image, and feature importance, to generate an AI explainable solution that can be manually understood. XAI can be classified into two types based on inherent explanatory nature of models: an intrinsic explainability method and a post-hoc explainability method. The intrinsic explainability method indicates to have an explainability capability based on a mechanism and a design of a model, such as a decision tree model, a feature decomposition model, and a support vector machine (support vector machine, SVM) model. The post-hoc explainability method requires additional explainability analysis for the model and is mainly applicable to deep learning models such as a neural network (neural network, NN) and a transformer. For a post-hoc XAI method that is model-independent, popular methods include a local interpretable model-agnostic explanations (local interpretable model-agnostic explanations, Lime) method, that is, an explanation method (shapley additive explanations, SHAP) of training an explainable equivalent linear model by using a local sample based on each feature Shapley value, a method (an Anchors method) for finding a minimum explainable subset range of a feature, and the like.

For AI methods concerned by a mobile network, currently a plurality of cases introduced by NG-RAN AI involve interaction between different nodes. Content of the interaction includes an input and an output related to an AI model, a related inference policy, and the like. AI models used by different nodes are generally implemented internally, that is, the AI models do not directly interact with each other across vendors. Therefore, the model or an output result needs to be explained by using an XAI method.

An example application scenario of the communication method in this application is that when a prediction and inference result of an AI model is exchanged between communication nodes, an explainability result of the prediction and inference result of the AI model is obtained by using an XAI method, to determine reasonableness of the prediction and inference result of the AI model, thereby ensuring communication reliability.

The following describes, with reference to specific embodiments, a new communication method provided in this application. The XAI method is adapted to an AI application in a mobile network, to provide model explainability analysis in interaction, to help a receiving node determine reliability of an output of an inference node.

In a communication method provided in an embodiment of this application, a management node performs inference of an AI task and model explainability analysis, and sends an inference result and an explainability result to a receiving node, so that the receiving node determines a confidence level of the inference result and performs a subsequent task. An example flowchart of the communication method in this embodiment is shown in FIG. 3. The method may include S305, S310, S320, S330, and S340.

S305: A model management node sends second information to a receiving node, where the second information indicates explainability related information associated with each of at least one output type. Correspondingly, the receiving node receives the second information.

In an example, the output type may include at least one of the following types: a type of an AI inference result subsequently provided by the model management node for the receiving node, for example, a prediction result or measurement execution subsequently provided by the model management node for the receiving node; specific data that the model management node needs to collect from the receiving node; the model management node indicating the receiving node to change a currently applied AI model policy; or a black-box AI model.

In an example, the explainability related information may include at least one piece of the following information: an explainability method, indicating a method for performing explainability analysis; explanation content of the explainability method, indicating explanation content corresponding to different explainability methods; and precision of the explainability method, indicating explanation precision provided by different explainability methods.

In an example, the explainability related information may include the output type. In this case, it indicates that the explainability related information is associated with the output type, in other words, other information included in the explainability related information is associated with the output type.

The explainability related information associated with the output type includes the explainability method, and the explainability method may be understood as an explainability method recommended or supported by an AI inference result of the output type, or an explainability method that can be supported or recommended by the model management node.

In some possible implementations, the second information may be understood as that the model management node sends an inference type indication to the receiving node and requests for an acknowledgment of the explainability method. Alternatively, a behavior of sending the second information by the management node may be understood as that the management node initiates an inference indication and an XAI acknowledgment.

In an example, the explainability method may include but is not limited to the following methods: Lime, Shap, and Anchors.

In an example, different explainability methods correspond to different returned explanation content. For example, the Shap method returns feature importance, the Anchors method returns a minimum subset of explainability, and the Lime-based method returns a linear model.

It should be noted that, a specifically used explainability method and corresponding explanation content are not limited in this application, and are universally applicable to a plurality of intrinsic or host-hoc explainability methods.

In an example, the explanation content of the explainability method may be an input attribute feature value, an AI model, or a comparison between explanation logic before and after a model change.

In an example, different explainability methods may provide different explanation precision and/or different quantities of feature attributes. For example, different explainability methods can provide different quantities of feature attributes corresponding to the inference result, and provide different precision of feature values.

For example, the Sharp method can provide a quantity of features corresponding to a prediction result, and whether a corresponding importance attribute (importance value) and/or an importance attribute value can be provided.

The explainability related information may be represented in an index-content-explanation method form shown in the following table, and various categories of combinations are indicated by establishing indexes.

**Table 1 Composition and correspondence of model explainability indication information**

| Index | Result type | Explainability method | Explanation content | Explanation |
|---|---|---|---|---|
| 1 | Data type | Lime, Shap, Anchors and the like | Provides an input attribute feature value and provides a linear model, and the like; and | Quantity of provided feature attributes; and |
| 2 | Policy type | | | |
| 3 | Prediction and inference result | | comparison between explanation logic before and after a model change and the like; | precision of the provided feature value; |

S310: The receiving node sends first information to the model management node. Correspondingly, the model management node receives the first information. The first information indicates explainability related information.

For ease of description, the explainability related information indicated by the first information may be referred to as first explainability related information.

In some possible implementations, the first information may be understood as required explainability related information that is indicated by the receiving node indicates to the model management node. Alternatively, a behavior of sending the first information by the receiving node may be understood as that the receiving node indicates a selected explainability method.

In some possible implementations, when the receiving node sends the first information, the explainability related information indicated by the first information may be determined by using the second information.

In an example, the explainability related information indicated by the first information may also be understood as explainability related information supported or recommended by the model management node.

In some possible implementations, the receiving node may feed back the selected explainability method to the model management node according to the explainability method indicated by the model management node; or the receiving node may feed back a default explainability method of the receiving node to the model management node without using the explainability method indicated by the model management node.

In an example, when the receiving node specifies the explainability related information supported or recommended by the model management node, the first information may be one of a plurality of pieces of explainability related information, and the first information further includes an index of the first explainability related information in the plurality of pieces of explainability related information.

In the steps of this embodiment, for the explainability related information indicated by the first information, refer to the content indicated in Table 1, or the first information may indicate explainability related information that needs to be additionally provided in addition to Table 1.

In an example, the first information may include an explainability method based on an index value and parameter selection corresponding to different explainability methods. For example, in a local explainability method such as Shap, Lime, or Anchors, information such as a selected local sample point or sample set needs to be indicated.

In an example, the first information may not indicate the first explainability related information based on an index, but may directly feed back the first explainability related information.

S320: The model management node performs AI model inference, and performs explainability analysis on an inference result of a first AI model.

In some possible implementations, the inference result of the AI model may be understood as an output result obtained by the model management node by training a prediction event by using the AI model.

In an example, in a general AI application case, for example, performing inference and prediction on a UE handover by using the AI model, the model management node may perform optimal handover decision by using the first AI model, adaptively adjust an optimal parameter and the like for the UE handover, and feed back an inference result of the first AI model to UE, that is, the receiving node. Finally, the UE performs a handover operation based on the inference result (or an output result) of the AI model. In this way, a handover delay of the UE can be reduced, a handover success rate can be improved, and so on.

It should be noted that, AI application interaction of a plurality of nodes in a communication system in this application includes but is not limited to channel prediction, handover prediction, load balancing, AI prediction information exchange between base stations, and the like. An AI application scenario in the communication system is not described in detail in this application, and a communication system that can implement a function set of an AI application in the communication system should fall within the protection scope of this application.

In some possible implementations, the model management node completes inference of an AI task based on an indication returned by the receiving node, and performs model explainability analysis based on a method agreed on with the receiving node, or adds an explainability description to the inference result of the model.

In some possible implementations, explainability analysis may be understood as explainability analysis performed on the inference result of the AI model by using a specified explainability method.

S330: The model management node sends the inference result and an explainability result of the first AI model to the receiving node. Correspondingly, the receiving node receives the inference result and the explainability result of the first AI model.

In some possible implementations, the model management node obtains the explainability result after performing explainability analysis on the inference result of the first AI model.

In this application, the explainability result of the inference result of the AI model may be a score of an explainability test, a model obtained by using the explainability method, or the like. The explainability result of the inference result of the AI model in this application may be referred to as explainability of the AI model.

In an example, when the explainability method which the model management node agrees to perform is Lime, the explainability result is a simple linear model of local approximation, and indicates that features of some dimensions in input data play a main role in the inference result. When the explainability method is Shap, the explainability result may be a feature weight value of one or more inputs for the inference result, and indicates, to the receiving node, impact of the one or more inputs on the inference result, to assist the receiving node for an answer of whether the inference result is logical. When the explainability method is Anchors, the explainability result is a set of features/if-then rules, and is used to explain the model.

In this embodiment of this application, after receiving the inference result of the AI model, the receiving node further needs to determine a confidence level or reasonableness of the inference result, to ensure reliability of applying the AI model to a communication network. In this case, the obtained inference result of the first AI model herein may be understood as related content information used to subsequently determine a confidence level and reasonableness of the first AI model.

In this embodiment, the model management node may send the inference result of the first AI model and the explainability result to the receiving node by using different messages or a same message.

In this embodiment of this application, after the receiving node obtains the explainability result of the inference result of the first AI model, optionally, the method further includes S340.

S340: The receiving node sends fifth information to the model management node, where the fifth information indicates the reasonableness of the inference result of the first AI model. Correspondingly, the model management node receives the fifth information.

In an example, that the inference result of the model is reasonable may be understood as that the receiving node accepts, recognizes, or relies on the inference result, and that the inference result of the model is unreasonable may be understood as that the receiving node does not accept, does not accept recognize, or does not rely on the inference result.

In some possible implementations, when the receiving node sends the fifth information to the model management node, it indicates that the inference result is reasonable, and when the receiving node does not send the fifth information, it indicates that the inference result is unreasonable; or when the receiving node sends the fifth information, it indicates that the inference result is unreasonable, and when the receiving node does not send the fifth information, it indicates that the inference result is reasonable.

In an example, the receiving node determines, based on the reasonableness of the inference result, whether to receive a related AI model output value or an operation indicated by a model policy.

In some possible implementations, if the receiving node receives the inference result, it indicates that the inference result is reasonable, and the receiving node receives the related AI model output value or the operation indicated by the model policy, and then further performs a subsequent task.

In some possible implementations, if the receiving node does not receive the inference result, the receiving node indicates a reason.

In an example, the indicated reason may be that a current explainability result is not recognized. Using the Lime method as an example, the receiving node may indicate that precision of a simple linear model is not recognized, and therefore the inference result is not recognized. Using the Shap method as an example, the receiving node may indicate that an input item or a weight of the input item is not recognized, that is, impact of a specific input item on the inference result is not recognized, and therefore the inference result is not recognized. Using the Anchors method as an example, the receiving node may indicate that a rule set or a sample point covered by the rule set is not recognized.

In an example, the indicated reason may be that the reasonableness of the inference result is not recognized, that is, a current explainability result is not considered correct, or an explainability result with better precision is required. For example, the Lime method requires a more accurate linear model, and the Shap method requires feature analysis results of more input parameters. Alternatively, a general method indicates that more various points are added to participate in explainability analysis and the like.

This embodiment provides an interaction process in which the model management node, that is, an AI prediction and inference node, performs explainability analysis. The prediction and inference node is also responsible for providing an output and explainability analysis of the AI model, so that when obtaining the output of the AI model, the receiving node can also determine reasonableness and reliability of a result based on the explainability analysis, and flexibly select whether the inference result can be used for a subsequent task. In addition, the prediction and inference node of the AI model provides the model inference result and performs explainability analysis, thereby reducing overheads of intermediate signaling exchange and better protecting privacy of the AI model.

Particularly, a specific AI task and a corresponding node instance are not limited in this embodiment, and a connection channel of a corresponding network element is selected as a corresponding interaction channel. For example, for an Nx interface, the receiving node is a gNB, the model management node is a core network side network element like a computing management network element CMF, and the base station requests an AI model inference result or a configuration scheduling policy from a compute network element of a core network; for an Xn interface, both the receiving node and the model management node are gNBs, where for example, a source station sends an AI model-based prediction result to a target station; for an F1 interface, the receiving node is a gNB-DU, the model management node is a central unit gNB-CU, and the receiving node and the model management node are responsible for AI model management in a unified manner; and for a Uu interface, the receiving node is a terminal UE, the model management node is a base station gNB, and the terminal obtains, from the base station, air interface information or a configuration policy predicted by the AI model.

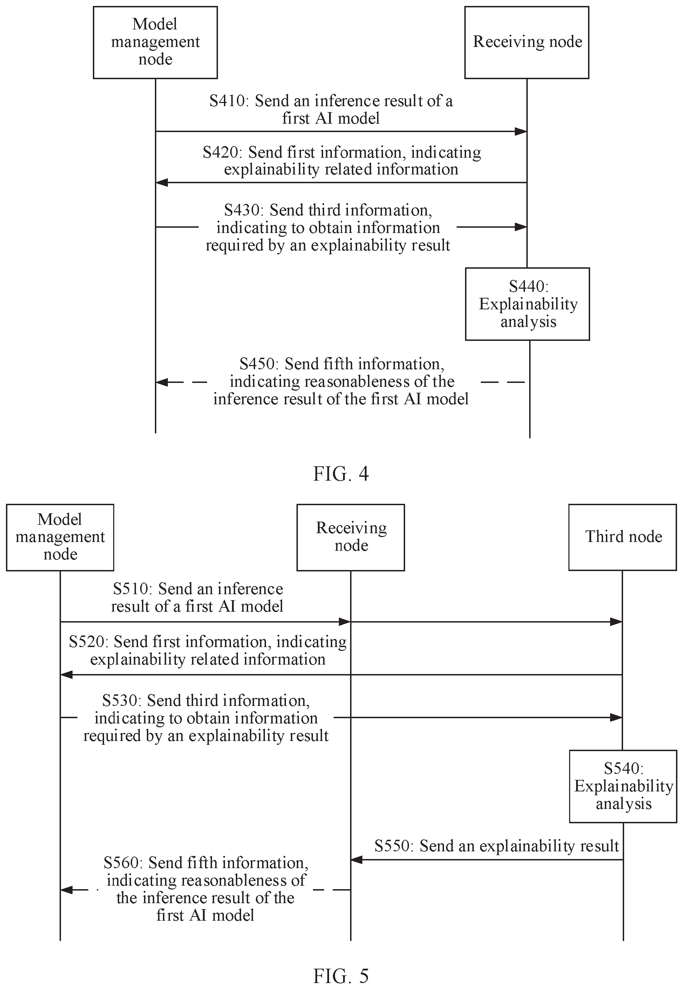

In a communication method provided in an embodiment of this application, a management node performs inference of an AI task, and sends, to a receiving node, an inference result and an input required for explainability analysis, and the receiving node performs explainability analysis, so that a subsequent task is performed. An example flowchart of the communication method in this embodiment is shown in FIG. 4. The method may include S410 to S460.

S410: A model management node sends an inference result of a first AI model to a receiving node. Correspondingly, the receiving node receives the inference result of the first AI model.

In some possible implementations, before the model management node sends the inference result, an inference process of the AI model is completed.

In this embodiment, for this step, refer to the process of obtaining and sending the inference result of the AI model in S320 and S330. Details are not described herein again.

S420: The receiving node sends first information to the model management node. Correspondingly, the model management node receives the first information. The first information indicates first explainability related information.

In an example, the explainability related information indicated by the first information may be explainability related information supported by the receiving node.

In the steps of this embodiment, the explainability related information indicated by the first information is determined with reference to the content indicated in Table 1.

In some possible implementations, the explainability related information may further include a related input required for performing explainability analysis, which may also be referred to as input data required for performing explainability analysis.

In some possible implementations, after receiving the inference result of the first AI model, the receiving node requests the model management node for an acknowledgment of the related input required for performing explainability analysis. Specific content may include but is not limited to a quantity of inputs, an inference result, and the like corresponding to a related policy and a logical architecture and the like of the model management node. An obtained parameter is used by the receiving node to perform explainability determination.

S430: The model management node sends third information to the receiving node. Correspondingly, the receiving node receives the third information. The third information indicates to obtain information required by an explainability result of the inference result of the first AI model.

In some possible implementations, the receiving node may obtain, by using the third information, the input data required for performing explainability analysis or an input required by an explainability method, and explainability analysis is performed on the input data, to obtain the explainability result.

In some possible implementations, the model management node may indicate the input required by the explainability method supported by the model management node, and feed back the input to the receiving node.

In an example, the model management node calculates, based on a local AI model, an input required by a corresponding explainability method, and feeds back the input to the receiving node. For example, in a local explainability method such as Shap, Lime, or Anchors, information such as a model output corresponding to a selected local sample point/set needs to be indicated.

S440: The receiving node performs explainability analysis on the inference result of the first AI model.

It may be understood that, the receiving node performs explainability analysis on the inference result or the policy based on the obtained model inference result and the input required by the explainability method provided by the model management node.

In this embodiment of this application, an explainability analysis method is not limited, and may be Shap, Anchors, Lime, or another method. A specific explainability analysis step is the same as that described in S320.

In this embodiment of this application, after the receiving node locally performs explainability analysis based on the inference result output by the model management node to obtain the explainability result, optionally, the method further includes S450.

S450: The receiving node sends fifth information to the model management node, where the fifth information indicates reasonableness of the inference result of the first AI model. Correspondingly, the model management node receives the fifth information.

In this embodiment, for this step, refer to step S340. Details are not described herein again.

This embodiment provides an interaction process in which the receiving node performs explainability analysis. The model management node provides auxiliary information for the receiving node to perform explainability analysis, so that the receiving node may flexibly perform explainability analysis locally. The auxiliary information provided by the model management node may be reused for subsequent other explainability analysis methods.

It should be noted that, a specific AI task and a corresponding node instance are not limited in this embodiment, and a connection channel of a corresponding network element is selected as a corresponding interaction channel. Details are shown in the foregoing embodiment, and are not described herein again.

In a communication method provided in an embodiment of this application, a management node performs inference of an AI task, and sends, to a third node, an inference result and an input required for explainability analysis, and the third node performs explainability analysis and sends an explainability result to a receiving node, so that the receiving node performs a subsequent task. An example flowchart of the communication method in this embodiment is shown in FIG. 5. The method may include S510 to S550.

S510: A model management node sends an inference result of a first AI model to a receiving node and a third node. Correspondingly, the receiving node and the third node receive the inference result of the first AI model.

It may be understood that, the model management node may send the inference result of the first AI model to both the receiving node and the third node.

In this embodiment, the third node is a network node that is in a communication system and that may be responsible for explainability analysis of the AI model in a unified manner.

In this embodiment, for this step, refer to S410. Details are not described herein again.

S520: The third node sends first information to the model management node. Correspondingly, the model management node receives the first information. The first information indicates first explainability related information.

In some possible implementations, the explainability related information indicated by the first information may be explainability related information supported by the third node.

In some possible implementations, the first information may be understood as explainability related information that is indicated by the third node indicates to the model management node.

In this embodiment, for the explainability related information indicated in this step, refer to S420. Details are not described herein again.

In some possible implementations, the method further includes: The third node sends fourth information to the model management node, where the fourth information is used to request to obtain information required by an explainability result of the inference result of the first AI model.

In other words, the third node requests, by using the fourth information, input data required for performing explainability analysis. For example, when determining the explainability result, the third node may send the fourth information.

S530: The model management node sends third information to the third node. Correspondingly, the third node receives the third information. The third information indicates to obtain the information required by the explainability result of the inference result of the first AI model.

In some possible implementations, the third information may be understood as the input data required for performing explainability analysis that is initiated by the model management node to the third node or an input required by an explainability method.

In some possible implementations, the model management node may indicate the input required by the explainability method supported by the model management node, and feed back the input to the third node.

In an example, the model management node calculates, based on a local AI model, an input required by a corresponding explainability method, and feeds back the input to the third node. For example, in a local explainability method such as Shap, Lime, or Anchors, information such as a model output corresponding to a selected local sample point/set needs to be indicated.

S540: The third node performs explainability analysis on the inference result of the first AI model.

In this embodiment, for this step, refer to step S440. Details are not described herein again.

S550: The third node sends the explainability result to the receiving node. Accordingly, the receiving node receives the explainability result.

In this embodiment, the third node determines, based on an output result of the model management node and a local explainability analysis result, whether to receive a related output value or an operation indicated by a policy, and feeds back the explainability analysis result to the receiving node.

S560: The receiving node sends fifth information to the model management node, where the fifth information indicates reasonableness of the inference result of the first AI model. Correspondingly, the model management node receives the fifth information.

In some possible implementations, when the receiving node sends the fifth information to the model management node, it indicates that the inference result is reasonable, and when the receiving node does not send the fifth information to the model management node, it indicates that the inference result is unreasonable; or when the receiving node sends the fifth information, it indicates that the inference result is unreasonable, and when the receiving node does not send the fifth information, it indicates that the inference result is reasonable.

In some possible implementations, the third node may directly send indication information to the model management node, or the receiving node may send indication information to the model management node.

In this embodiment, for this step, refer to step S340. Details are not described herein again.

This embodiment provides an interaction process in which a third management node is introduced to perform explainability analysis. The model management node provides auxiliary information for the third node to perform explainability analysis in a unified manner, so that deployment and management of explainability analysis of a mobile network are more centralized and easier to be modified, and no additional computation load is added to an original node to analyze explainability of a model.

It should be noted that, a specific AI task and a corresponding node instance are not limited in this embodiment, and a connection channel of a corresponding network element is selected as a corresponding interaction channel. A specific instance of model management node-receiving node-third management node may be gNB-UE/gNB-model management network element, gNB(DU)-UE-gNB(CU), and the like.

This embodiment of this application provides a solution in which model explainability analysis and interaction are added to an AI application in a communication network, so that a capability of the receiving node to determine a confidence level of an AI inference model can be improved. In addition, a difference between the three embodiments of this application lies in different deployment locations of the three types of explainability analysis. For example, the three types of explainability analysis are deployed in the model management node, the receiving node, and the third-party management node.

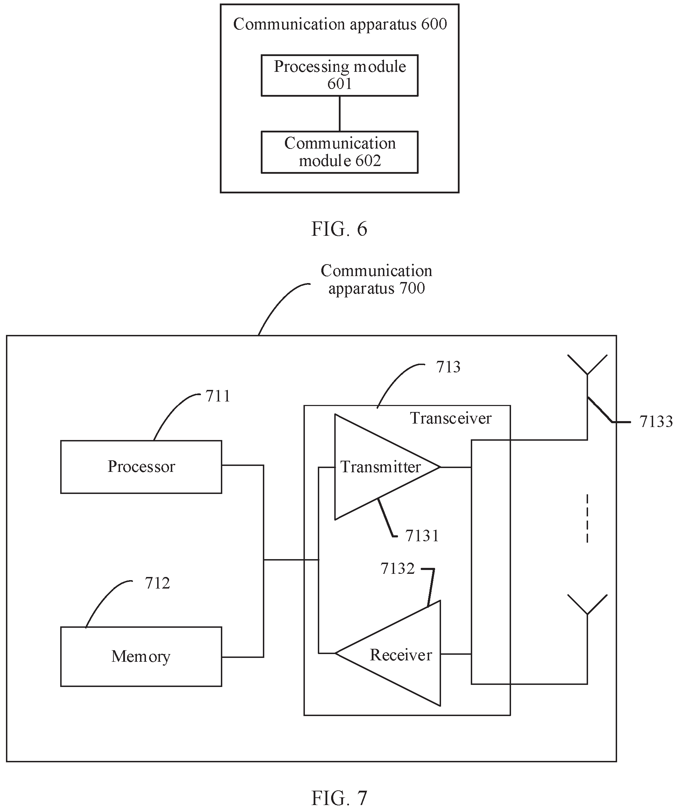

FIG. 6 is a diagram of a structure of a communication apparatus according to an embodiment of this application. As shown in FIG. 6, the apparatus 600 may include a processing module 601 and a communication module 602.

In a first example, the apparatus 600 may be configured to implement the communication method implemented by the model management node in any one of embodiments shown in FIG. 3 to FIG. 5. For example, the processing module 601 is configured to implement processing-related steps performed by the model management node in any one of embodiments shown in FIG. 3 to FIG. 5, and the communication module 602 is configured to implement steps such as sending and/or receiving performed by the model management node in any one of embodiments shown in FIG. 3 to FIG. 5.

In a second example, the apparatus 600 may be configured to implement the communication method implemented by the receiving node in any one of embodiments shown in FIG. 3 to FIG. 5. For example, the processing module 601 is configured to implement processing-related steps performed by the receiving node in any one of embodiments shown in FIG. 3 to FIG. 5, and the communication module 602 is configured to implement steps such as sending and/or receiving performed by the receiving node in any one of embodiments shown in FIG. 3 to FIG. 5.

In a third example, the apparatus 600 may be configured to implement the communication method implemented by the third node in any one of embodiments shown in FIG. 3 to FIG. 5. For example, the processing module 601 is configured to implement processing-related steps performed by the third node in any one of embodiments shown in FIG. 3 to FIG. 5, and the communication module 602 is configured to implement steps such as sending and/or receiving performed by the third node in any one of embodiments shown in FIG. 3 to FIG. 5.

FIG. 7 is a diagram of a structure of a communication apparatus to which an embodiment of this application is applicable. As shown in FIG. 7, a communication apparatus 700 includes a processor 711, a memory 712, and a transceiver 713. The transceiver 713 includes a transmitter 7131, a receiver 7132, and an antenna 7133.

The processor 711, the memory 712, and the transceiver 713 communicate with each other through an internal connection path.

The receiver 7132 may be configured to receive transmission control information by using the antenna 7133, and the transmitter 7131 may be configured to send transmission feedback information to another communication node by using the antenna 7133.

Optionally, the apparatus 700 may further include a memory 712 configured to store instructions to be executed by the processor 711, store input data required by the processor 711 to run the instructions, or store data generated after the processor 711 runs the instructions.

In an example, the processor 711 is configured to implement the function of the processing module 601, and the transceiver 713 is configured to implement the function of the communication module 602.

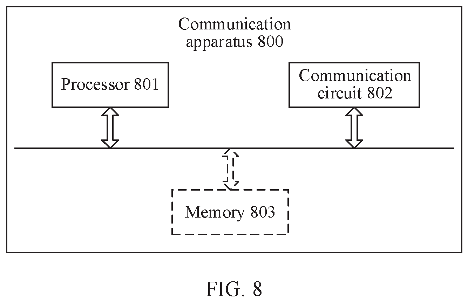

FIG. 8 is a diagram of a structure of a communication apparatus according to another embodiment of this application. As shown in FIG. 8, an apparatus 800 includes a processor 801 and a communication circuit 802. The processor 801 and the communication circuit 802 are coupled to each other. It may be understood that, the communication circuit 802 may be a transceiver or an input/output interface. Optionally, the apparatus 800 may further include a memory 803 configured to store instructions to be executed by the processor 801, store input data required by the processor 801 to run the instructions, or store data generated after the processor 801 runs the instructions. It may be understood that, the memory 803 may be located outside the processor 801, or may be located inside the processor 801.

In an example, the processor 801 is configured to implement the function of the processing module 601, and the communication circuit 802 is configured to implement the function of the communication module 602.

The apparatus 800 may be a communication device, or may be a chip used in a communication device. For example, the apparatus 800 may be a communication node or a chip applied to a communication node. It may be understood that when the apparatus 800 is a communication node, the communication circuit 802 may be a transceiver.

Some embodiments of this application further provide a computer program product. When the computer program product runs on a processor, the method implemented by the communication node in any one of the foregoing embodiments may be implemented.

Some embodiments of this application further provide a computer-readable storage medium. The computer-readable storage medium includes computer instructions. When the computer instructions are run on a processor, the method implemented by the communication node in any one of the foregoing embodiments may be implemented.

In some embodiments of this application, a communication system is further provided. The system may implement the method implemented by the communication node in any one of the foregoing embodiments.

It may be understood that, the processor in embodiments of this application may be the following device or all or a part of circuits configured for a function of processing in the following device: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a communication node, wherein the method comprises:
obtaining an inference result of a first artificial intelligence AI model; and
obtaining an explainability result of the inference result.

2. The method according to claim 1, wherein the method further comprises:
sending first information, wherein the first information indicates first explainability related information, the first explainability related information is explainability related information, the explainability related information comprises at least one piece of the following information: an explainability method, an output type, explanation content of the explainability method, or explanation precision of the explainability method, and the output type is a type of an inference result of an AI model.

3. The method according to claim 2, wherein the first information is one of a plurality of pieces of explainability related information, and the first information comprises an index of the first explainability related information in the plurality of pieces of explainability related information.

4. The method according to any one of claims 1 to 3, wherein the method further comprises:
receiving second information, wherein the second information indicates explainability related information associated with each of at least one output type.

5. The method according to any one of claims 1 to 4, wherein the method further comprises:
receiving third information, wherein the third information indicates to obtain information required by the explainability result of the inference result of the first AI model; and
the obtaining the explainability result of the inference result comprises:
determining the explainability result based on the third information.

6. The method according to claim 5, wherein the method further comprises:
sending fourth information, wherein the fourth information is used to request to obtain the information required by the explainability result of the inference result of the first AI model.

7. The method according to any one of claims 1 to 6, wherein the method further comprises:
sending the explainability result.

8. The method according to any one of claims 1 to 4, wherein the obtaining the explainability result of the inference result comprises:
receiving the explainability result.

9. The method according to any one of claims 1 to 8, wherein the method further comprises:
sending fifth information, wherein the fifth information indicates reasonableness of the inference result of the first AI model.

10. A communication apparatus, comprising a functional module configured to implement the method according to any one of claims 1 to 9.

11. A communication apparatus, comprising a memory and a processor, wherein the memory is configured to store program instructions, and the processor is configured to execute the program instructions in the memory, to implement the method according to any one of claims 1 to 9.

12. A computer-readable storage medium, wherein the computer-readable storage medium stores program code to be executed by a computer, and the program code comprises instructions for implementing the method according to any one of claims 1 to 9.

13. A computer program product, wherein the computer program product comprises instructions for implementing the communication method according to any one of claims 1 to 9.
